# EUROPEAN PATENT APPLICATION

(11) **EP 4 407 637 A1**
(43) Date of publication of application: **31.07.2024**
(21) Application number: 23153891.9
(22) Date of filing: 30.01.2023
(51) Int. Cl.: H01B 7/14, H02G 1/10

(54) **THREE-CORE TO THREE SINGLE CORE HV OR EHV SUBMARINE POWER CABLE SYSTEM**

(71) Applicant: NKT HV Cables AB, 371 60 Lyckeby (SE)
(72) Inventor: GUSTAFSSON, Kristian, Karlskrona (SE); LIND, Ola, Jämjö (SE); SOARES, Tiago César de Almeida, Lyckeby (SE)
(74) Representative: Kransell & Wennborg KB

(57) **Abstract**

A high voltage, HV, or extra high voltage, EHV, submarine power cable system (47) comprising: a three-core submarine power cable (1) comprising three stranded power cores, each comprising a respective conductor and an insulation system arranged around the conductor, comprising an inner semiconducting layer, an insulation layer comprising a first polymeric material, and an outer semiconducting layer, three single core submarine power cables (25), each comprising a respective conductor and insulation system arranged around the conductor, comprising an inner semiconducting layer, an insulation layer comprising the first polymeric material, and an outer semiconducting layer, and a rigid joint (49) connecting each power core of the three-core submarine power cable (1) to a respective one of the single core submarine power cables (25).

## Description

### TECHNICAL FIELD

The present disclosure generally relates to submarine power cables.

### BACKGROUND

Power cables are operated only up to a predefined maximum allowed temperature to ensure the integrity of the insulation system. This means that the maximum allowed temperature defines an upper limit of the power capacity of a power cable.

The thermal bottleneck of submarine power cables is normally located at the landfall where due to the deeper burial depth the heat transfer to the surrounding soil is less efficient than in the underwater section of the power cable. Solutions for improving the power capacity of a submarine AC three-core power cable at the landfall section include increasing the conductor size, using copper conductor material instead of aluminium, and/or by using non-magnetic armour materials for reducing the cable losses.

### SUMMARY

It would however be desirable to improve the power capacity of a submarine AC three-core power cable without any limitation to the above-described parameters, or to improve the power capacity even further. Thus, in view of the above an object of the present disclosure is to provide a high voltage or extra high voltage submarine power cable system which solves or at least mitigates the problems of the prior art.

There is hence according to a first aspect provided a high voltage, HV, or extra high voltage, EHV, submarine power cable system comprising: a three-core submarine power cable comprising three stranded power cores, each comprising a respective conductor and an insulation system arranged around the conductor, comprising an inner semiconducting layer, an insulation layer comprising a first polymeric material, and an outer semiconducting layer, three single core submarine power cables, each comprising a respective conductor and insulation system arranged around the conductor, comprising an inner semiconducting layer, an insulation layer comprising the first polymeric material, and an outer semiconducting layer, and a rigid joint connecting each power core of the three-core submarine power cable to a respective one of the single core submarine power cables.

By jointing the three-core submarine power cable to three single core submarine power cables, the cooling of the three single core submarine power cables by the surroundings is improved at landfall. Therefore, the maximal power capacity of the three-core submarine power cable is increased. Alternatively, the conductor size, or cross-section, of the three single core submarine power cables may be minimised, to reduce the amount of cable material used while maintaining the required original power rating.

With high voltage is herein meant a rated voltage 30 kV or higher, such as 72 kV or higher. With extra high voltage is meant a rated voltage higher than 150 kV.

According to one embodiment the first polymeric material is cross-linked polymer, XLPE, a thermoplastic polyolefin such as polypropylene, or a polyolefin elastomer such as ethylene propylene rubber, EPR, or ethylene propylene diene monomer, EPDM, rubber.

According to one embodiment each of the three power cores comprises a respective metallic water blocking layer arranged around the insulation system or each of the three power cores has a wet or semi-wet design, wherein the three-core submarine power cable comprises an armour layer comprising a plurality of armour wires arranged helically around the three stranded power cores.

With "wet design" is herein meant that there is no metallic water barrier present outside the insulation system. In a wet design as defined herein, there may be a polymeric sheath arranged concentrically with and radially outside the insulation system, and there may optionally be a screen layer between the insulation system and the polymeric sheath.

A semi-wet design as defined herein also means that there is no metallic water barrier present outside the insulation system. There is however a layer of water swelling tape arranged radially outside the insulation system, radially inside the polymeric sheath which is arranged concentrically with the insulation system.

According to one embodiment each single core submarine power cable comprises a respective metallic water blocking layer arranged around the insulation system or each single core submarine power cable has a wet or a semi-wet design, and a respective armour layer comprising a plurality of armour wires arranged helically around the metallic water blocking layer.

According to one embodiment the armour wires of the single core submarine power cables comprise at least one of copper, aluminium, stainless steel, and polymeric material. Copper, aluminium, stainless steel, and polymeric materials are non-magnetic. The AC losses of the HV or EHV submarine power cable system in a landfall section may thus be further reduced, and the maximal power capacity of the HV or EHV submarine power cable system can be further improved.

According to one embodiment the rigid joint comprises three pre-moulded joint sleeves, each connecting the insulation system of a respective power core with the insulation system of one of the single core submarine power cables.

The pre-moulded joint sleeves may comprise the first polymeric material.

According to one embodiment the three-core submarine power cable and the three single core submarine power cables are AC power cables.

According to one embodiment the conductor of each of the three single core submarine power cables is of Milliken type. The AC losses of the HV or EHV submarine power cable system may in a landfall section be reduced further when using Milliken type conductors compared to using other conductor types, and the maximal power capacity of the HV or EHV submarine power cable system can be further improved.

There is according to a second aspect provided a submarine power cable installation comprising: the HV or EHV submarine power cable system of the first aspect, wherein the three-core submarine power cable lays offshore, wherein the rigid joint is installed offshore before landfall of the three single core submarine power cables, wherein a first section of each three single core submarine power cable extends under water, and wherein a second section of each three single core submarine power cable extends on land.

According to one embodiment the single core submarine power cables are arranged spaced apart from each other with at least a distance d. By arranging the single core submarine power cables at a distance from each other, the cooling of the single core submarine power cables will be more efficient because the heat emission from each single core submarine power cable will have a smaller effect on the other single core submarine power cables of the three single core submarine power cables. The maximum power capacity of the HV or EHV submarine power cable system may therefore be further improved.

According to one embodiment the distance d is 1 m.

According to one embodiment the three single core power cables are installed underground.

According to one embodiment at least at one location along the first section, the three single core submarine power cables are located deeper than the rigid joint.

There is according to a third aspect provided a method of operating the submarine power cable installation of the second aspect, comprising increasing the current rating of the HV or EHV submarine power cable system based on reduced heat losses in the three single core submarine power cables.

Generally, all terms used in the claims are to be interpreted according to their ordinary meaning in the technical field, unless explicitly defined otherwise herein. All references to "a/an/the element, apparatus, component, means", etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a cross-section of an example of a three-core submarine power cable;
Fig. 2 schematically shows a cross-section of an example of a single core submarine power cable;
Fig. 3 schematically depicts a joint between a three-core submarine power cable and three single core submarine power cables; and
Fig. 4 schematically shows an example of a submarine power cable installation.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

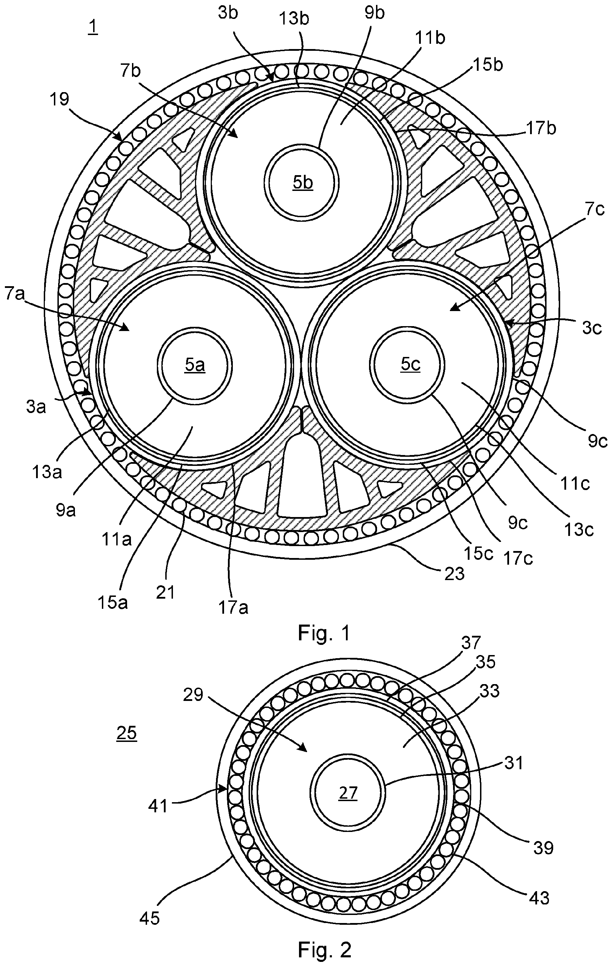

Fig. 1 shows a cross-sectional view of an example of a three-core submarine power cable 1.

The three-core submarine power cable 1 is an HV or an EHV three-core submarine power cable.

The three-core submarine power cable 1 is an AC power cable.

The HV or EHV three-core submarine power cable 1 comprises three power cores 3a-3c. The power cores 3a-3c are stranded.

Each power core 3a-3c comprises a respective conductor 5a-5c.

Each power core 3a-3c comprises an insulation system 7a-7c arranged around the respective conductor 5a-5c.

Each insulation system 7a-7c comprises an inner semiconducting layer 9a-9c arranged around the conductor 5a-5c, an insulation layer 11a-11c arranged around the inner semiconducting layer 9a-9c, and an outer semiconducting layer 13a-13c arranged around the insulation layer 11a-11c.

The insulation layer 11a-11c comprises a first polymeric material. The first polymeric material may for example comprise a polyolefin such as a crosslinked polyolefin, e.g., crosslinked polyethylene (XLPE), or a thermoplastic polyolefin such as polypropylene, or a polyolefin elastomer such as ethylene propylene rubber (EPR), or ethylene propylene diene monomer (EPDM) rubber.

The inner semiconducting layer 9a-9c and the outer semiconducting layer 13a-13c may comprise polymeric material mixed with conductive particles such as carbon black.

The insulation system 7a-7c may be an extruded insulation system, for example a triple extruded insulation system.

Each power core 3a-3c may further comprise a respective metallic water blocking layer 15a-15c arranged around the insulation system 7a-7c. The metallic water blocking layer 15a-15c may for example comprise stainless steel, copper, aluminium, or lead.

Each power core 3a-3c may comprise a respective polymeric sheath 17a-17c arranged around the insulation system 7a-7c. If the power cores 3a-3c comprise the metallic water blocking layer 15a-15c, the polymeric sheath 17a-17c is arranged around the metallic water blocking layer 15a-15c.

The three-core submarine power cable 1 may comprise an armour layer 19 comprising a plurality of armour wires 21 arranged helically around the three stranded power cores 3a-3c.

The three-core submarine power cable 1 comprises an outer layer 23, which forms the outermost layer of the three-core submarine power cable 1. The outer layer 23 may be an outer sheath comprising a polymeric material or an outer serving composed of helically wound polymeric yarns.

Fig. 2 shows a cross-sectional view of a single core submarine power cable 25.

The single core submarine power cable 25 is an HV or an EHV single core submarine power cable.

The single core submarine power cable 25 is an AC power cable.

The single core submarine power cable 25 may be designed to have the same power capacity as that of any one of the individual power cores 3a-3c.

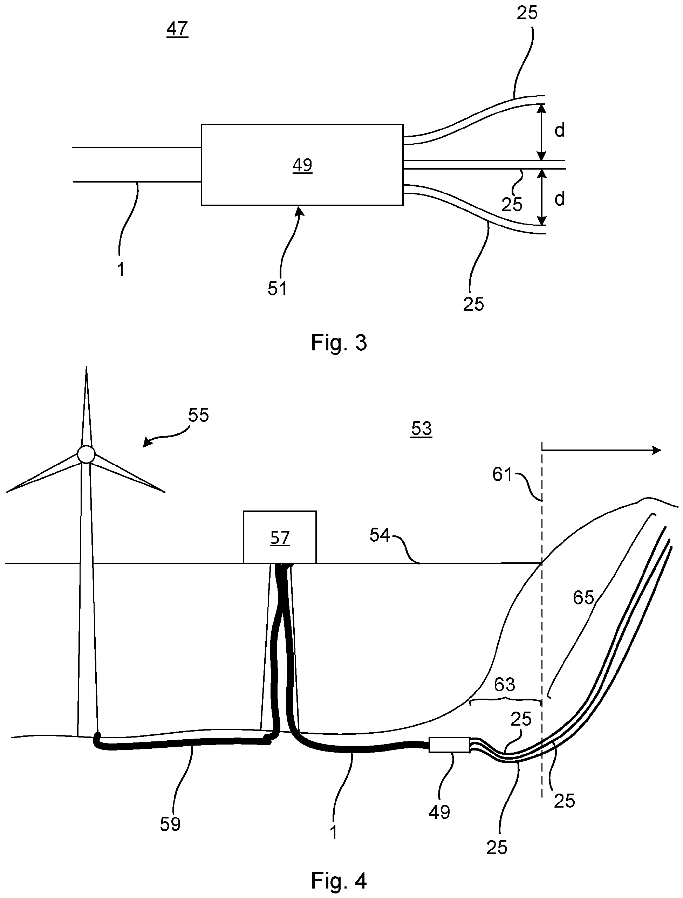

Three single core submarine power cables 25 together with the three-core submarine power cable 1 form part of an HV or EHV submarine power cable system, as will be described in more detail with reference to Fig. 3.

Each single core submarine power cable 25 is jointed with a respective one of the power cores 3a-3c.

Each single core submarine power cable 25 comprises a conductor 27 and an insulation system 29 arranged around the conductor 27.

The conductor 27 may for example be a round stranded conductor, a solid conductor, a keystone, or profile, conductor, or a Milliken conductor.

The insulation system 29 comprises an inner semiconducting layer 31 arranged around the conductor 27, an insulation layer 33 arranged around the inner semiconducting layer 31, and an outer semiconducting layer 35 arranged around the insulation layer 33.

The insulation layer 29 comprises the first polymeric material, i.e., the same polymeric material as the insulation layer 7a-7c of the power cores 3a-3c.

The inner semiconducting layer 31 and the outer semiconducting layer 35 may comprise polymeric material mixed with conductive particles such as carbon black.

The insulation system 29 may be an extruded insulation system, for example a triple extruded insulation system.

Each single core submarine power cable 25 may comprise a respective metallic water blocking layer 37 arranged around the insulation system 29. The metallic water blocking layer 37 may for example comprise stainless steel, copper, aluminium, or lead.

Each single core submarine power cable 25 may comprise a polymeric sheath 39 arranged around the insulation system 29. In case the single core submarine power cable 25 comprises the metallic water blocking layer 37, the polymeric sheath 39 is arranged around the metallic water blocking layer 37.

Each single core submarine power cable 25 may comprise a respective armour layer 41 comprising a plurality of armour wires 43 arranged helically around the insulation system 29 and, if present, the metallic water blocking layer 37.

The armour wires 43 may for example comprise copper, aluminium, stainless steel, and/or a polymeric material.

Each single core submarine power cable 25 comprises an outer layer 45 which forms the outermost layer of the single core submarine power cable 25. The outer layer 45 may be an outer sheath comprising a polymeric material or an outer serving composed of helically wound polymeric yarns.

Fig. 3 schematically shows an example of an HV or EHV submarine power cable system 47 comprising a three-core submarine power cable such as the three-core submarine power cable 1, and three single core submarine power cables such as the single core submarine power cables 25. The HV or EHV submarine power cable system 47 also comprises a rigid joint 49 connecting the power cores 3a-3c of the three-core submarine power cable 1 with a respective one of the singe core submarine power cables 25.

The rigid joint 49 may comprise three pre-moulded joint sleeves, each being arranged over a respective conductor joint, i.e., the joint between a conductor 5a-5c of the three-core submarine power cable 1 and a conductor 27 of one of the single core submarine power cables 25. The pre-moulded joint sleeves restore the insulation system over the conductor joint and may have field grading properties. The rigid joint 49 may comprise three inner casings. The inner casings may be made of metal. Each conductor joint and pre-moulded sleeve is arranged in a respective inner casing, to which the metallic water blocking layers 15a-15c and 37 may be thermally attached, e.g., by soldering or welding, along their entire circumference. The rigid joint 49 further comprises an outer casing 51, inside which the three inner casing are arranged. The outer casing 51 may be made of metal such as stainless steel or aluminium. The armour wires 21 of the three-core submarine power cable 1 may be attached to the outer casing 51. The armour wires 43 of the three single core submarine power cables 25 may be attached to the outer casing 51. The attachment of the armour wires 21 and 43 may for example be by means of welding to a respective weld sleeve of the outer casing 51, and/or by clamping.

In an installed state, the single core submarine power cables 25 are arranged spaced apart from each other with at least a distance d, which may be at least 1 m. Thus, each single core submarine power cables 25 may be arranged at a distance of at least 1 m from any of the other two single core submarine power cables 25. The distance d is typically not achieved at the rigid joint 49, where the three single core submarine power cables 25 exit the outer casing 51 but some distance, such as one or more metres, away from the outer casing 51 as at least two of the single core submarine power cables 25 are bent away from each of the other single core submarine power cables 25.

Fig. 4 shows an example of a submarine power cable installation 53, comprising the HV or EHV submarine power cable system 47 in an installed state.

For the purpose of exemplification, the HV or EHV submarine power cable system 47 is shown in the context of an offshore wind farm including offshore wind turbines, such as wind turbine 55, and an offshore substation 57 connected to the wind turbine 55, arranged in water 54.

An array cable 59 is connected between the wind turbines 55 and the offshore substation 57. The three-core submarine power cable 1, which may be an export cable, is connected to the offshore substation 57 and is lead towards shore. The three-core submarine power cable 1 is thus arranged offshore, under water.

The rigid joint 49 is installed offshore before landfall of the three single core submarine power cables 25. Landfall begins in level with the seashore and is located to the right of the vertical dashed line 61, as illustrated by the right-pointing arrow. A first section 63 of each three single core submarine power cable 25 extends under water. Typically, the first section 63 extends underground offshore. A second section 65 of each of the three single core submarine power cables 25 extends on land. Typically, the second section 65 is located onshore underground.

At least at one location along the first section 63, the three single core submarine power cables 25 are located deeper than the rigid joint 49.

A method of operating the submarine power cable installation 53 comprises increasing the current rating of the HV or EHV submarine power cable system 47 based on reduced heat losses in the three single core submarine power cables 25 as compared to if the three single core submarine power cables 25 would be replaced with a three-core submarine power cable along the first section 63 and the second section 65, e.g. if no jointing of the three-core submarine power cable 1 would have been made by means of the rigid joint 49.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A high voltage, HV, or extra high voltage, EHV, submarine power cable system (47) comprising:
a three-core submarine power cable (1) comprising three stranded power cores (3a, 3b, 3c), each comprising a respective conductor (5a, 5b, 5c) and an insulation system (7a, 7b, 7c) arranged around the conductor (5a, 5b, 5c), comprising an inner semiconducting layer (9a, 9b, 9c), an insulation layer (11a, 11b, 11c) comprising a first polymeric material, and an outer semiconducting layer (13a, 13b, 13c),
three single core submarine power cables (25), each comprising a respective conductor (27) and insulation system (29) arranged around the conductor (29), comprising an inner semiconducting layer (31), an insulation layer (33) comprising the first polymeric material, and an outer semiconducting layer (35), and
a rigid joint (49) connecting each power core (3a, 3b, 3c) of the three-core submarine power cable (1) to a respective one of the single core submarine power cables (25).

2. The HV or EHV submarine power cable system (47) as claimed in claim 1, wherein the first polymeric material is cross-linked polymer, XLPE, a thermoplastic polyolefin such as polypropylene, or a polyolefin elastomer such as ethylene propylene rubber, EPR, or ethylene propylene diene monomer, EPDM, rubber.

3. The HV or EHV submarine power cable system (47) as claimed in claim 1 or 2, wherein each of the three power cores (3a, 3b, 3c) comprises a respective metallic water blocking layer (15a, 15b, 15c) arranged around the insulation system (7a, 7b, 7c) or each of the three power cores (3a, 3b, 3c) has a wet or semi-wet design, wherein the three-core submarine power cable (1) comprises an armour layer (19) comprising a plurality of armour wires (21) arranged helically around the three stranded power cores (3a, 3b, 3c).

4. The HV or EHV submarine power cable system (47) as claimed in any of the preceding claims, wherein each single core submarine power cable (25) comprises a respective metallic water blocking layer (37) arranged around the insulation system (29) or each single core submarine power cable (25) has a wet or semi-wet design, and a respective armour layer (41) comprising a plurality of armour wires (43) arranged helically around the metallic water blocking layer (37).

5. The HV or EHV submarine power cable system (47) as claimed in claim 4, wherein the armour wires (43) of the single core submarine power cables (25) comprise one of copper, aluminium, stainless steel, and polymeric material.

6. The HV or EHV submarine power cable system (47) as claimed in any of the preceding claims, wherein the rigid joint (49) comprises three pre-moulded joint sleeves, each connecting the insulation system (7a, 7b, 7c) of a respective power core (3a, 3b, 3c) with the insulation system (29) of one of the single core submarine power cables (25).

7. The HV or EHV submarine power cable system (47) as claimed in any of the preceding claims, wherein the three-core submarine power cable (1) and the three single core submarine power cables (25) are AC power cables.

8. The HV or EHV submarine power cable system (47) as claimed in any of the preceding claims, wherein the conductor (27) of each of the three single core submarine power cables (25) is of Milliken type.

9. A submarine power cable installation (53) comprising:
the HV or EHV submarine power cable system (47) as claimed in any of the preceding claims,
wherein the three-core submarine power cable (1) lays offshore,
wherein the rigid joint (49) is installed offshore before landfall of the three single core submarine power cables (25), wherein a first section (63) of each three single core submarine power cable extends under water, and
wherein a second section (65) of each three single core submarine power cable (25) extends on land.

10. The submarine power cable installation (53) as claimed in claim 9, wherein the single core submarine power cables (25) are arranged spaced apart from each other with at least a distance d.

11. The submarine power cable installation (53) as claimed in claim 10, wherein the distance d is 1 m.

12. The submarine power cable installation (53) as claimed in any of claims 9-11, wherein the three single core power cables (25) are installed underground.

13. The submarine power cable installation (53) as claimed in any of claims 9-12, wherein at least at one location along the first section (63), the three single core submarine power cables (25) are located deeper than the rigid joint (49).

14. A method of operating the submarine power cable installation (53) as claimed in any of claims 9-13, comprising increasing the current rating of the HV or EHV submarine power cable system (47) based on reduced heat losses in the three single core submarine power cables (25).
